# EUROPÄISCHE PATENTSCHRIFT

(11) **EP 1 667 852 B1**
(45) Veröffentlichungstag und Bekanntmachung des Hinweises auf die Patenterteilung: **11.03.2009**
(21) Anmeldenummer: 04741928.8
(22) Anmeldetag: 30.06.2004
(51) Int. Cl.: B60C 11/12

(54) **FAHRZEUGLUFTREIFEN**
PNEUMATIC VEHICLE TIRE
PNEUMATIQUE POUR VEHICULE

(30) Priorität: 20.09.2003 DE 10343614
(43) Veröffentlichungstag der Anmeldung: 14.06.2006
(73) Patentinhaber: Continental Aktiengesellschaft, 30165 Hannover (DE)
(72) Erfinder: DIENSTHUBER, Franz, 30167 Hannover (DE); DÖRRIE, Helge, 30173 Hannover (DE)
(74) Vertreter: Finger, Karsten
(86) Internationale Anmeldenummer: PCT/EP2004/051301
(87) Internationale Veröffentlichungsnummer: WO 2005/030501

(56) Entgegenhaltungen:
- EP-A- 1 190 871
- WO-A-01/60642
- WO-A-99/48707
- PATENT ABSTRACTS OF JAPAN Bd. 2000, Nr. 09, 13. Oktober 2000 (2000-10-13) & JP 2000 177330 A (YOKOHAMA RUBBER CO LTD:THE), 27. Juni 2000 (2000-06-27)

## Beschreibung

Die Erfindung betrifft einen Fahrzeugluftreifen mit einem Laufstreifen mit Profilelementen, welche mit Einschnitten endlicher Breite versehen sind, welche an zumindest einem der beiden Einschnittwände mindestens eine, im Wesentlichen in radialer Richtung verlaufende Gummirippe aufweisen, deren Stärke geringer ist als die Einschnittsbreite bei unbelastetem Laufstreifen. Die Erfindung betrifft ferner eine Vulkanisationsform mit Lamellenbleche zur Erzeugung von Einschnitten endlicher Breite in Laufstreifen von Fahrzeugluftreifen.

Ein Fahrzeugluftreifen sowie eine Vulkanisationsform der eingangs genannten Art sind aus der EP-A-1 190 871 bekannt. Die in radialer Richtung an zumindest einer Einschnittwand vorgesehenen Gummirippen sind derart angeordnet und ausgeführt, dass die Längenbereiche, in denen die Einschnitte eine größere Breite aufweisen, eine Länge zwischen 4 mm und 16 mm haben, und dass die Längenbereiche, in denen die Einschnitte eine kleinere Breite aufweisen, nur eine Länge zwischen 10% und 80% der längeren Längenbereiche aufweisen. Die Gummirippen, die bis zum Einschnittgrund reichen, weisen einen rechteckigen Querschnitt und ausgeprägte, in radialer Richtung verlaufenden Kanten auf.

Winterreifen und andere Reifen (Ganzjahresreifen), die für den Einsatz unter winterlichen Fahrbedingungen geeignet sind, werden üblicherweise im Laufstreifen mit einer Vielzahl von Einschnitten versehen, um gute Griffeigenschaften sowie gutes Traktions- und Bremsverhalten auf matschigem, eisigem oder schneeigem Untergrund sicherzustellen. Diese Einschnitte haben üblicherweise eine Breite zwischen 0,4 und 0,7 mm und können in Draufsicht verschiedene Formen aufweisen. Üblich sind beispielsweise gerade verlaufende, zick-zack-förmige, wellenförmige oder treppenförmige Einschnitte. Je nach Beanspruchung und Ausführung schließen sich die Einschnitte zumindest abschnittsweise während des Abrollens des Reifens, und zwar dann, wenn sie in Kontakt mit dem Untergrund treten. Die Einschnitte im Laufstreifen von Reifen werden durch in die den Laufstreifen ausformenden Formteilen der betreffenden Vulkanisationsform in entsprechender Anzahl verankerte Lamellenbleche erzeugt. Die Einschnitte können eine beliebige Orientierung am Laufstreifen, beispielsweise mehr in Querrichtung oder mehr in Umfangsrichtung, aufweisen.

Um das Traktionsverhalten von Reifen auf schneebedeckten Fahrbahnen zu erhöhen, ist es von Vorteil, wenn die Einschnitte während es Abrollen des Reifens bzw. während des Kontaktes im Laufstreifen mit dem Untergrund möglichst über ihre gesamte Länge geöffnet bleiben. Um dies zu erreichen, wurde versucht, die Einschnittwände der Einschnitte gegenseitig durch Gummibrücken auf einem gewissen Abstand zu halten. Dazu werden in den Lamellenblechen Schlitze vorgesehen, durch die das Gummimaterial während der Vulkanisation des Reifens fließen und aushärten kann. Die derart entstehenden Gummibrücken werden beim Entformen des Reifens zwangsweise durchgerissen, was den erwünschten Effekt leider zum Teil zunichte macht. Werden als Alternative dickere Lamellenbleche verwendet, um breitere Einschnitte zu erzeugen, führt dies zu einer Verringerung der Profilsteifigkeit, wodurch eine Vielzahl von Profileigenschaften unerwünscht beeinflusst wird.

Aus der WO 99/48707 ist es bekannt, Einschnitte In Reifen, die für das Fahren unter winterlichen Bedingungen vorgesehen sind, derart auszuführen, dass die Einschnittwände jeweils mit einer Vielzahl von Vertiefungen und Vorsprüngen versehen sind, wobei jedem Vorsprung an der einen Einschnittwand eine korrespondierende Vertiefung an der gegenüberliegenden Einschnittwand entspricht, sodass Vertiefungen und Vorsprünge miteinander In Eingriff bringbar sind. Reifen mit derartigen Einschnitten sollen bessere Traktionseigenschaften auf eisigen und schneeigen Fahrbahnen aufweisen. Die vorgeschlagenen Maßnahmen sind aber nicht dafür geeignet, die Einschnitte während ihres Kontaktes mit dem Untergrund beim Abrollen des Reifens in gezielter und gewünschter Weise geöffnet zu halten.

Der Erfindung liegt die Aufgabe zu Grunde, sicherzustellen, dass die Einschnitte im Laufstreifen beim Abrollen des Reifen und während ihres Kontaktes mit dem Untergrund zur Verbesserung und Erhöhung der Traktion zumindest in einem Bereich ihrer Länge durch Gummirippen offen bleiben, welche auch bei hohen Belastungen besonders haltbar sein sollen.

Gelöst wird die gestellte Aufgabe erfindungsgemäß dadurch, dass die Gummirippe einen halbrunden Querschnitt aufweist und knapp vor dem Einschnittgrund endet.

Beim Abrollen des Reifen werden daher die Einschnitte durch die Rippen In jedem Fall offen gehalten, da die Gummirippen wie Abstandshalter wirken. Damit bleiben auch in der Aufstandsfläche des Reifens wirksame Griffkanten erhalten. Durch ihren halbrunden Querschnitt haben die Gummirippen eine lange Lebensdauer und werden durch die Belastungen während des Abrollens des Reifens nicht beschädigt.

Die Erfindung betrifft ferner eine Vulkanisationsform zur Herstellung eines derartigen Reifens, mit Lamellenblechen, welche mit zumindest einer in radialer Richtung der Form verlaufenden Einkerbung versehen sind, welche die Dicke der Lamellenbleche örtlich verringert. Die Vulkanisationsform ist dadurch gekennzeichnet, dass die Einkerbungen einen halbrunden Querschnitt aufweisen.

Mit derart ausgeführten Lamellenblechen werden in Einschnittwänden Gummirippen erzeugt, die beim Entformen des fertig vulkanisierten Reifens nicht beschädigt werden und somit in erwünschter Weise ihre Wirkung entfalten können.

Bei neuen Reifen reichen die Einschnitte noch auf ihre volle Tiefe. Es ist daher von Vorteil, wenn die Gummirippen bis zur Peripherie des Laufstreifens reichen.

Dabei ist es ausreichend, wenn die Stärke der Gummirippen maximal der halben Einschnittbreite entspricht. In diesem Fall lassen sich die Gummirippen auch mit dünnen Lamellenblechen, die sehr schmale Einschnitte erzeugen, herstellen.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 eine Draufsicht auf einige Profilelemente eines Laufstreifenprofils,
Fig. 2 und Fig. 3 Vorderansichten unterschiedlicher Ausführungsformen von Lamellenblechen, wobei jene Teile der Bleche dargestellt sind, die einen Einschnitt formen, und
Fig. 4 einen Schnitt durch das Lamellenblech aus Fig. 3.

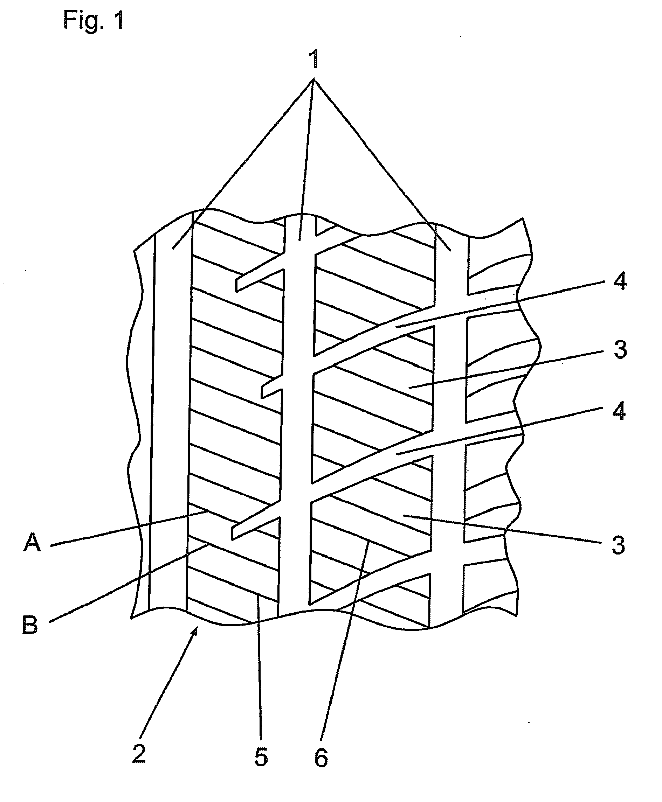

Fig. 1 zeigt die Draufsicht auf einige Profilelemente eines Laufstreifenprofils, wobei drei gerade und in Umfangsrichtung umlaufende breite Umfangsnuten 1 und Schrägnuten 4 vorgesehen sind, die eine Gliederung in ein Laufstreifenband 2 und Blöcke 3 einer Blockreihe bewirken. Die Schrägnuten 4 trennen die Blöcke 3 in Umfangsrichtung voneinander und enden im Laufstreifenband 2 als Sacknuten.

Ein derartig ausgeführter Profilbereich kann beispielsweise im Laufstreifenmittelbereich eines Winterreifens für Personenkraftwagen vorgesehen sein.

Das Laufstreifenband 2 und die Blöcke 3 sind zur Verbesserung ihrer Griffeigenschaften auf nassem, matschigem oder schneeigem Untergrund mit einer Vielzahl von Einschnitten 5, 6 versehen. Die Einschnitte 5, 6 sind hier der Einfachheit halber als gerade verlaufende, das Laufstreifenband 2 und die Blöcke 3 jeweils komplett durchquerende Einschnitte gezeichnet. Die Einschnitte 5, 6 verlaufen im dargestellten Beispiel unter einem spitzen Winkel zur Reifenquerrichtung, der insbesondere kleiner als 45° ist. Bevorzugt sind die Einschnitte in Draufsicht auf nicht gezeigte Weise jedoch wellenförmig, zick-zackförmig oder treppenförmig ausgeführt. Derartige Ausführungen von Einschnitten sind aus dem Stand der Technik bestens bekannt.

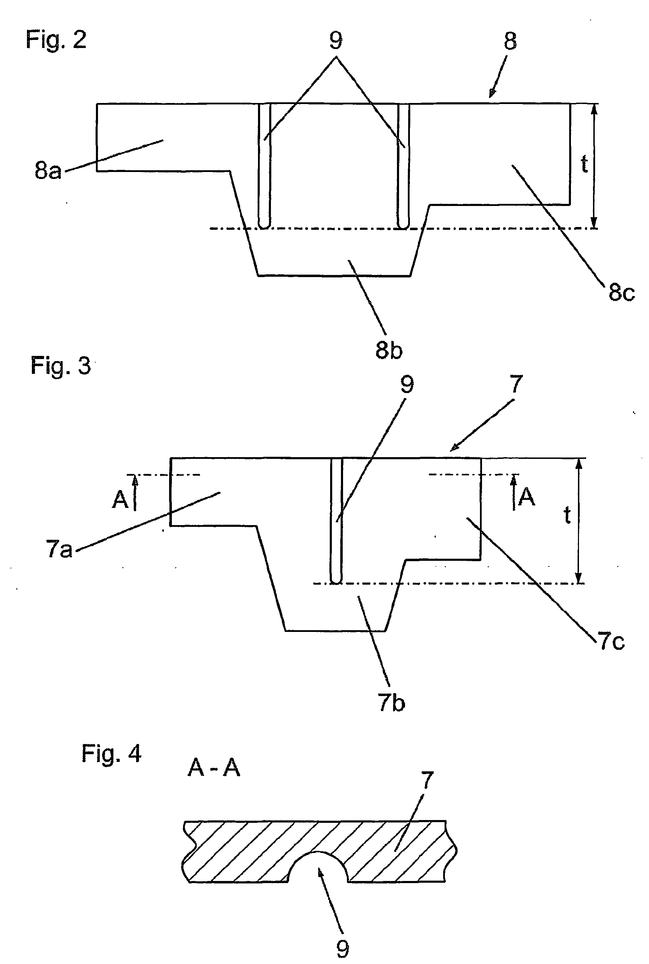

Fig. 2 zeigt eine Vorderansicht jenes Teils eines Lamellenbleches 8, welches zur Herstellung des in Fig. 1 mit A bezeichneten Einschnittes 5 vorgesehen ist, Fig. 3 zeigt die Ansicht jenes Teiles eines Lamellenbleches 7 zur Herstellung des in Fig. 1 mit B bezeichneten Einschnittes 5. Die Lamellenblechteile, mit welchen die Lamellenbleche 7, 8 in bekannter Weise in jenen Teilen bzw. Segmenten einer Vulkanisationsform verankert sind, die bei der Vulkanisation des Reifens den Laufstreifen ausformen, sind nicht dargestellt. Die Lamellenbleche 7, 8 sind bei der dargestellten Ausführungsform in einer konstanter Stärke von 0,6 mm ausgeführt. Üblicherweise beträgt die Breite der Lamellenbleche zwischen 0,3 und 0,8 mm. Demnach weisen die mit der Lamellenblechen 7,8 erstellten Einschnitte A, B eine Breite auf, die jener der Bleche 7, 8 entspricht. Die dargestellten Lamellenbleche 7, 8 erzeugen Einschnitte A, B mit variierender Tiefe. Der Einschnitt A weist einen durch den mittleren Abschnitt 8b des Lamellenbleches 8 geformten tiefen Abschnitt auf, an welchen seitlich seichtere Abschnitte geringerer Tiefe anschließen, welche durch die Teilbereiche 8a, 8c geformt werden. Der mit dem Lamellenblech 7 erzeugte Einschnitt B ist ähnlich ausgeführt, da das Lamellenblech 7 einen mittleren längeren Teilbereich 8b und seitliche Teilbereiche 8a, 8c geringerer Höhe aufweist. Die gezeigten Lamellenblechausgestaltungen sind nur beispielhaft und sind, was die Tiefe der gebildeten Einschnitte und deren Variation betrifft, nicht Gegenstand dieser Erfindung.

Durch zumindest eine, bezogen auf den Reifen in radialer Richtung verlaufende Einkerbung 9 im Lamellenblech 7 und durch zwei derartige, parallel verlaufende Einkerbungen 9 im Lamellenblech 8 werden im Reifen an der zugehörigen Einschnittwand eine bzw. mehrere Rippe(n) erzeugt, die ebenfalls in radialer Richtung verläuft bzw. verlaufen. Die Einkerbungen 9 weisen eine Erstreckung t auf, die fast der Höhe der Abschnitte 7b, 8b entspricht und sind insbesondere gerade verlaufende Nuten konstanter Querschnittsform und konstanter Nutentiefe. Der Verlauf der Einkerbungen 9 kann von der radialen Richtung geringfügig abweichen, wobei darauf zu achten ist, dass die am Reifen entstehenden Rippen beim Entformen (dem Öffnen der Vulkanisationsform) nicht durch- oder eingerissen werden. Die durch die Einkerbungen 9 in den Einschnittwänden gebildeten Rippen verlaufen von der Reifenperipherie bis in eine Tiefe t und enden somit in einem geringen Abstand vom Einschnittgrund.

Wie Fig. 4 zeigt, werden die Einkerbungen 9 bevorzugt mit einem halbrunden Querschnitt und mit einem Radius ausgeführt, welcher der Hälfte der Stärke des Lamellenbleches 7 entspricht. Bei einem Lamellenblech 7 der Stärke 0,6 mm beträgt daher der Radius des halbrunden Querschnittes 0,3 mm.

Gemäß der in Fig. 2, 3 und 4 gezeigten bevorzugten Ausführung ist die bzw. sind die Einkerbung(en) 9 an jenem Bereich bzw. an jenen Bereichen der Lamellenbleche 7, 8 ausgebildet, die Einschnittabschnitte der maximalen Tiefe bilden. Dies kann, muss jedoch nicht der Fall sein. Falls mehr als eine Einkerbung 9 pro Lamellenblech vorgesehen ist, können diese auf einer der Lamellenblechseiten oder auf beiden Lamellenblechseiten vorgesehen sein.

Die Erfindung ist auf die dargestellten Ausführungsformen nicht einschränkt. So ist es insbesondere möglich, die Einkerbungen 9 kürzer als gezeigt auszuführen. Die Erfindung ist ferner bei allen möglichen Arten von Lamellenblechen bzw. den mit ihnen erzeugten Einschnitten anwendbar.

## Patentansprüche

1. Fahrzeugluftreifen mit einem Laufstreifen (2) mit Profilelementen (3) welche mit Einschnitten (5, 6) endlicher Breite versehen sind, welche an zumindest einem der beiden Einschnittwände mindestens eine, im Wesentlichen in radialer Richtung verlaufende Gummirippe aufweisen, deren Stärke geringer ist als die Einschnittsbreite bei unbelastetem Laufstreifen,
**dadurch gekennzeichnet,**
**dass** die Gummirippe einen halbrunden Querschnitt aufweist und knapp vor dem Enschnittgrund endet.

2. Fahrzeugluftreifen nach Anspruch 1, **dadurch gekennzeichnet, dass** die Gummirippe bis zur Peripherie des Laufstreifens reicht.

3. Fahrzeugluftreifen nach Anspruch 1, **dadurch gekennzeichnet, dass** die Gummirippe an jenem Bereich der Einschnittwand ausgebildet ist, der bis auf maximale Enschnitttiefe reicht.

4. Fahrzeugluftreifen nach einem der Ansprüche 1 bis 3, **dadurch gekennzeichnet, dass** die Stärke der Gummirippe maximal der halben Einschnittbreite entspricht.

5. Vulkanisationsform mit Lamellenblechen zur Erzeugung von Einschnitten endlicher Breite in Laufstreifen von Fahrzeugluftreifen, wobei Lamellenbleche (7, 8) vorgesehen sind, welche mit zumindest einer in radialer Richtung der Form verlaufenden Einkerbung (9) versehen sind, welche die Dicke der Lamellenbleche (7, 8) örtlich verringert,
**dadurch gekennzeichnet,**
**dass** die Einkerbungen (9) einen halbrunden Querschnitt aufweisen.

6. Vulkanisationsform nach Anspruch 5, **dadurch gekennzeichnet, dass** die Einkerbungen (9) an jenen Lamellenblechteilen ausgebildet sind, die tiefe Einschnittbereiche bilden.

7. Vulkanisationsform nach Anspruch 5 oder 6, **dadurch gekennzeichnet, dass** die Einkerbungen (9) über einen Großteil der radialen Erstreckung der Lamellenbleche (7, 8) verlaufen.

8. Vulkanisationsform nach einem der Ansprüche 5 bis 7, **dadurch gekennzeichnet, dass** die Tiefe der Einkerbungen (9) höchstens der halben Lamellenblechstärke entspricht.

## Claims

1. Pneumatic vehicle tyre with a tread rubber (2) with profile elements (3), which are provided with sipes (5, 6) of a finite width, which have on at least one of the two walls thereof at least one rubber rib, which extends substantially in the radial direction and the thickness of which is less than the width of the sipe when the tread rubber is in the unloaded state, **characterized in that** the rubber rib has a semicircular cross section and ends just before the base of the sipe.

2. Pneumatic vehicle tyre according to Claim 1, **characterized in that** the rubber rib reaches up to the periphery of the tread rubber.

3. Pneumatic vehicle tyre according to Claim 1, **characterized in that** the rubber rib is formed on that region of the wall of the sipe that reaches to the maximum depth of the sipe.

4. Pneumatic vehicle tyre according to one of Claims 1 to 3, **characterized in that** the thickness of the rubber rib corresponds at most to half the width of the sipe.

5. Vulcanizing mould with lamella strips for producing sipes of finite width in tread rubbers of pneumatic vehicle tyres, comprising lamella strips (7, 8) which are provided with at least one notch (9) extending in the radial direction of the mould and locally reducing the thickness of the lamella strips (7, 8), **characterized in that** the notches (9) have a semicircular cross section.

6. Vulcanizing mould according to Claim 5, **characterized in that** the notches (9) are formed on those parts of the lamella strips that form the deep regions of the sipes.

7. Vulcanizing mould according to Claim 5 or 6, **characterized in that** the notches (9) extend over a large part of the radial extent of the lamella strips (7, 8).

8. Vulcanizing mould according to one of Claims 5 to 7, **characterized in that** the depth of the notches (9) corresponds at most to half the thickness of the lamella strips.

## Revendications

1. Bandage pneumatique pour véhicule, qui présente une bande de roulement (2) dotée d'éléments profilés (3) qui sont dotés d'entailles (5, 6) de largeur finie qui présentent sur au moins une des deux parois d'entaille au moins une nervure en caoutchouc qui s'étend essentiellement dans la direction radiale et dont l'épaisseur est plus petite que la largeur de l'entaille lorsque la bande de roulement n'est pas sollicitée,
**caractérisé en ce que**
la nervure en caoutchouc a une section transversale semi-circulaire et se termine avant le fond de l'entaille.

2. Bandage pneumatique pour véhicule selon la revendication 1, **caractérisé en ce que** la nervure en caoutchouc s'étend jusqu'à la périphérie de la bande de roulement.

3. Bandage pneumatique pour véhicule selon la revendication 1, **caractérisé en ce que** la nervure en caoutchouc est formée dans la partie de la paroi de l'entaille qui s'étend jusqu'à la profondeur maximale de l'entaille.

4. Bandage pneumatique pour véhicule selon l'une des revendications 1 à 3, **caractérisé en ce que** l'épaisseur de la nervure en caoutchouc correspond au maximum à la moitié de la largeur de l'entaille.

5. Moule de vulcanisation doté de tôles en lamelles destinées à former des entailles de largeur finie dans la bande de roulement de bandages pneumatiques pour véhicule, dans lequel sont prévues des tôles en lamelles (7, 8) dotées d'au moins une rainure (9) qui s'étend dans la direction radiale du moule et qui diminue localement l'épaisseur des tôles en lamelles (7, 8),
**caractérisé en ce que**
les rainures (9) ont une section transversale semi-circulaire.

6. Moule de vulcanisation selon la revendication 5, **caractérisé en ce que** les rainures (9) sont formées sur les parties des tôles à lamelles qui forment les parties profondes des entailles.

7. Moule de vulcanisation selon les revendications 5 ou 6, **caractérisé en ce que** les rainures (9) s'étendent sur la plus grande partie de l'extension radiale des tôles à lamelles (7, 8).

8. Moule de vulcanisation selon l'une des revendications 5 à 7, **caractérisé en ce que** la profondeur des rainures (9) correspond au plus à la moitié de l'épaisseur des tôles en lamelles.
